(19) Europäisches Patentamt
European Patent Office
Office européen des brevets

(11) EP 0 498 440 B1

(12) EUROPEAN PATENT SPECIFICATION

(45) Date of publication and mention
of the grant of the patent:
29.04.1998 Bulletin 1998/18

(51) Int Cl.⁶: G11B 11/10

(21) Application number: 92102019.4

(22) Date of filing: 06.02.1992

(54) **Magneto-optical recording medium**

Magneto-optisches Aufzeichnungsmedium

Milieu d'enregistrement magnéto-optique

(84) Designated Contracting States:
AT DE FR GB

(30) Priority: 08.02.1991 JP 18074/91
08.02.1991 JP 18071/91
08.02.1991 JP 18073/91

(43) Date of publication of application:
12.08.1992 Bulletin 1992/33

(73) Proprietor: SONY CORPORATION
Tokyo (JP)

(72) Inventors:
• **Ohta, Masumi**
**Shinagawa-ku, Tokyo (JP)**
• **Nakao, Isamu**
**Shinagawa-ku, Tokyo (JP)**
• **Aratani, Katsuhisa**
**Shinagawa-ku, Tokyo (JP)**
• **Nakaoki, Ariyoshi**
**Shinagawa-ku, Tokyo (JP)**
• **Kaneko, Masahiko**
**Shinagawa-ku, Tokyo (JP)**

(74) Representative: **Müller, Frithjof E., Dipl.-Ing. et al**
**Patentanwälte**
**MÜLLER & HOFFMANN,**
**Innere Wiener Strasse 17**
**81667 München (DE)**

(56) References cited:
EP-A- 0 210 855     EP-A- 0 318 925
EP-A- 0 368 194     EP-A- 0 415 449
EP-A- 0 492 581     GB-A- 2 110 459
US-A- 4 883 710     US-A- 4 932 012

• **JAPANESE PATENTS GAZETTE Section EI,
Week 8627, Derwent Publications Ltd., London,
GB; Class T03, AN 86-173946; & JP-A-61 108 112
( RICOH KK ) 26 May 1986**
• **JAPANESE PATENTS ABSTRACTS
(EXAMINED) Section EI, Week 9038, Derwent
Publications Ltd., London, GB; Class T03, AN
90-286356 & JP-A-2 201 756 (EPSON CORP. ) 9
August 1990**
• **JAPANESE PATENTS ABSTRACTS
(EXAMINED) Section EI, Week 8950, Derwent
Publications Ltd., London, GB; Class T03, AN
89-366619 & JP-A-1 273 248 (NIKON CORP. ) 1
November 1989**
• **PATENT ABSTRACTS OF JAPAN vol. 7, no. 168
(P-212)23 July 1983 & JP-A-58 073 017 ( RICOH
K.K. ) 2 May 1983**

## Description

The present invention relates to a magneto-optical recording medium.

There is a magneto-optical recording reproducing system in which writing is accomplished by forming information recording pits or bubble domains by local heating with laser irradiation and readout is accomplished by utilizing the magneto-optical mutual effect, or the Kerr effect or Faraday effect. This system needs very small recording pits for high-density recording. Reducing the size of recording pits poses a problem associated with resolution (resolving power) for read-out. The resolution depends on the wavelength of the laser used for read-out and the numerical aperture (NA) of the objective.

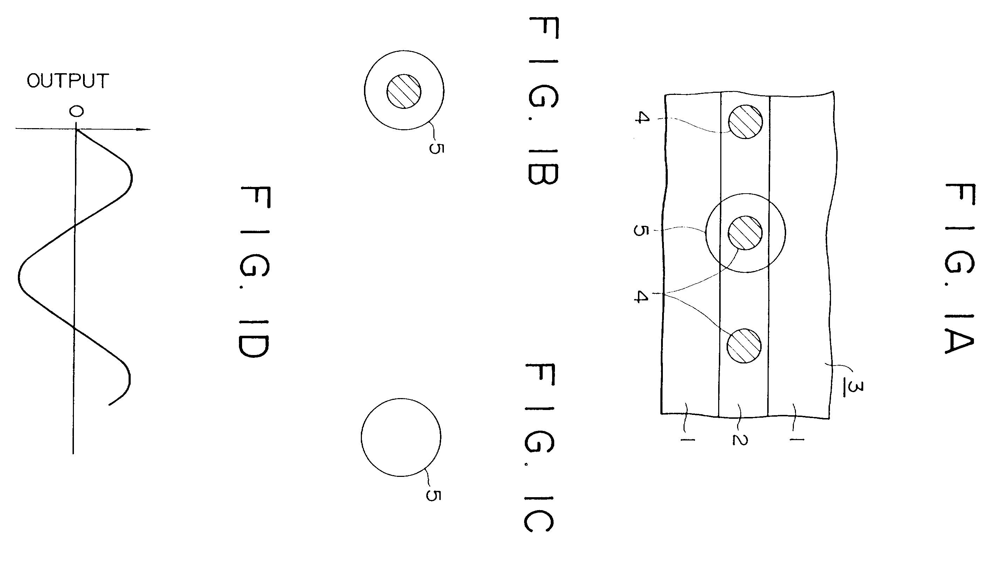

The magneto-optical recording-reproducing system in general use is explained with reference to Figure 1. Figure 1A is a schematic plan view of the recording pattern in a magneto-optical recording medium 3 (such as magneto-optical disk). It has recording pits 4 (hatched parts) formed in the land 2 held between the grooves 1. The recording pits represent binary information "1" or "0". Read-out is accomplished in the following manner. It is assumed that a round laser beam spot 5 for read-out scans the magneto-optical medium 3. If the recording pits 4 are arranged at sufficient intervals, there will be two cases, depending on whether or not only one recording pit 4 is present in one beam spot 5 as shown in Figures 1B and 1C. The recording pits 4 arranged regularly at such intervals will give a sinusoidal output as shown in Figure 1D in which the output is reversed positive and negative alternately with respect to the reference level 0.

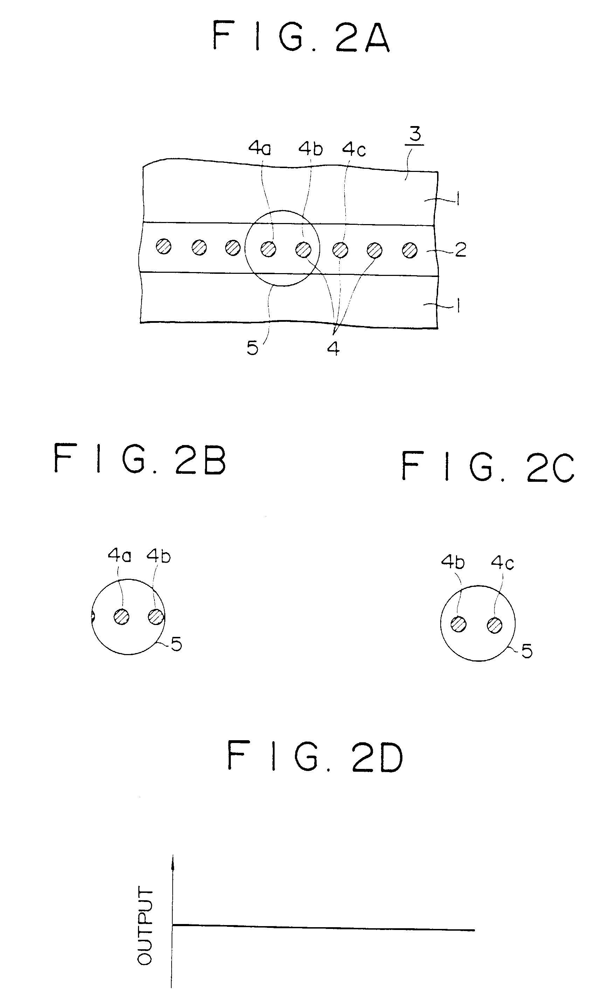

However, the situation will be different in the case of the recording pattern as shown in Figure 2A (schematic plan view). In this case, the recording pits 4 are so densely arranged that more than one of the recording pits 4 are present in one beam spot 5. Suppose there are three adjacent recording pits 4a, 4b, and 4c. Then it will be possible that two adjacent recording pits 4a and 4b are present in one beam spot 5 as shown in Figure 2B. It will be also possible that two adjacent recording pits 4b and 4c are present in one beam spot 5 as shown in Figure 2C. In these two cases, the recording pits give the same output, which has a linear waveform as shown in Figure 2D. In other words, these two cases cannot be distinguished from each other.

Although the conventional magneto-optical recording system permits high-density recording with recording pits formed at close intervals, it suffers from a disadvantage of being poor in resolution for read-out as mentioned above, which results from the fact that the recording pits 4 on the magneto-optical recording medium 3 are read directly. This disadvantage leads to a problem associated with S/N (or C/N) which prevents a satisfactory high-density recording and read-out.

To address the problem associated with S/N (or C/N), it is necessary to improve the resolution (resolving power) for read-out. On the other hand, the resolution is restricted by the wavelength of the laser and the numerical aperture of the objective. To solve these problems the present inventors have proposed a magneto-optical recording and reproducing system with an ultrahigh resolution (referred to as MSR hereinafter) (See Japanese Patent Application No. 225685/1989 "Method for magneto-optical recording and reproducing", incorporated herein).

The MSR system is intended to improve the resolution for read-out. According to this system, the recording pit 4 appears at the time of read-out only at a specific temperature which is created as the beam spot 5 for read-out moves relative to the magneto-optical recording medium. The MSR system works in two modes, an appearance mode and a disappearance mode.

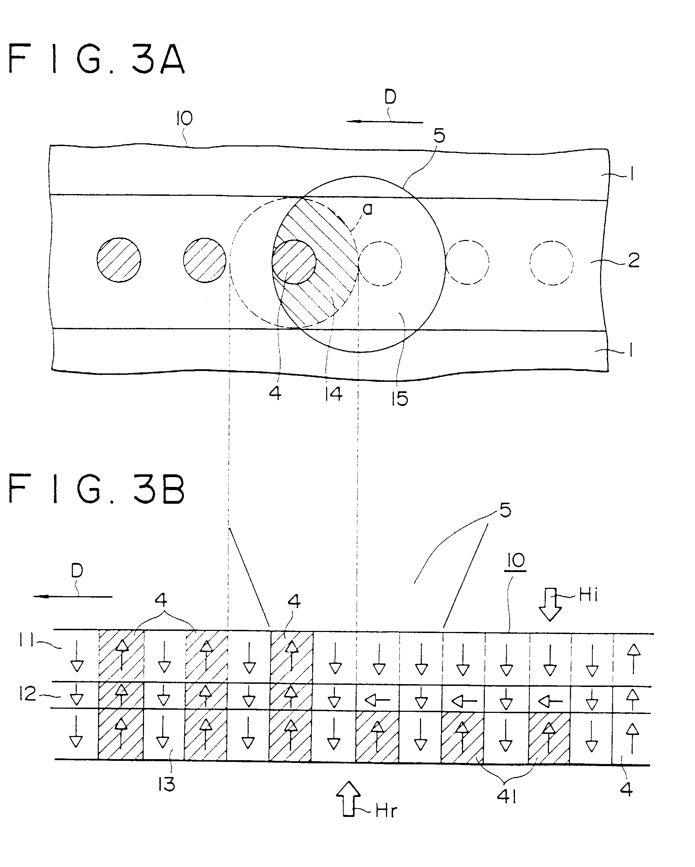

The MSR system that works in the appearance mode is explained with reference to Figure 3A, a schematic plan view showing the recording pattern in the magneto-optical recording medium 10, and Figure 3B, a schematic sectional view showing the magnetization for recording. It is assumed that the magneto-optical recording medium 10 moves in the direction of arrow D relative to the laser beam spot 5, as shown in Figure 3A. The magneto-optical recording medium 10 (for example, magneto-optical disk) has at least a reproducing layer 11 and a recording layer 13 and preferably an intermediate layer 12 interposed between them, as shown in Figure 3B. These layers 11, 12, and 13 are capable of vertical magnetization, with their magnetic moment schematically shown by arrows. The downward direction represents the initialized state (for example, "0" of binary information), and the upward direction represents the recording pit 4 (for example, "1" of binary information) formed in the recording layer 13.

The information retrieval from the magneto-optical recording medium 10 is accomplished in the following manner. First, an initializing magnetic field $H_i$ is applied from the outside so that the reproducing layer 11 is magnetized in the downward direction, as shown in Figure 3B. In other words, the initializing magnetic field causes the recording pit 4 in the reproducing layer 11 to disappear but the recording pit 4 in the recording layer 13 remains as the latent recording pit 41, with its direction of magnetization opposite to that in the reproducing layer 11 owing to the domain wall formed in the intermediate layer 12.

Then, a reproducing magnetic field $H_r$ (in the opposite direction to the initializing magnetic field $H_i$) is applied to the magneto-optical recording medium 10 at the read-out stage. As the recording medium 10 moves, the region containing the initialized latent recording pits 41 comes in under the laser beam spot 5. As the part heated by the laser beam comes near the forward end of the beam spot 5 (or moves leftward in Figure 3), a high-temperature region 14 occurs which is indicated by hatches surrounded by a broken line a. In this region 14, the domain wall of the intermediate layer 12 disappears and the magnetization of the recording layer 13 is transferred to the reproducing layer 11 by the exchange force. As a result, the latent recording pit 41 which has been present in the recording layer 13 appears as the retrievable recording pit 4 in the reproducing layer 11.

The recording pit 4 which appears in this manner can be read out by detecting the rotation of the plane of polarization of the beam spot 5 which is induced by the Kerr effect or Faraday effect according to the direction of magnetization in the reproducing layer 11. However, in the low-temperature region 15 of the beam spot 5, the latent recording pit 41 does not appear in the reproducing layer 11. In other words, the retrievable recording pit 4 is present only in the high-temperature region 14 indicated by hatches in the beam spot 5. The result is that it is possible to retrieve the single recording pit 4 even though the magneto-optical recording medium 10 has such a high-density recording that more than one recording pit 4 are present in the beam spot 5.

To accomplish read-out as mentioned above, it is necessary to properly select the initializing magnetic field $H_i$, the reproducing magnetic field $H_r$, and the coercive force, thickness, magnetization, and domain wall energy of the individual magnetic layers according to the temperature of the high-temperature region 14 and low-temperature region 15 in the beam spot 5. There are several conditions to be satisfied which are defined by the following four expressions in which it is assumed that the reproducing layer 11 has the coercive force $H_{c1}$ the thickness $h_1$, and the saturation magnetization $M_{s1}$, respectively. The initializing magnetic field $H_i$ to initialize the reproducing layer 11 alone is given by the expression (1) below.

$$H_i > H_{c1} + \sigma_{w2}/2M_{s1}h_1 \qquad (1)$$

(where $\sigma_{w2}$ denotes the domain wall energy at the interface between the reproducing layer 11 and the recording layer 13.)

The condition required for the recording layer 13 to hold information with the magnetic field is defined by the expression (2) below, assuming that the recording layer 13 has the coercive force $H_{c3}$, the saturation magnetization $M_{s3}$, and the thickness $h_3$.

$$H_i < H_{c3} - \sigma_{w2}/2M_{s3}h_3 \qquad (2)$$

The coercive force $H_{c1}$ which permits the domain wall to be retained by the intermediate layer 12 between the reproducing layer 11 and the recording layer 13 even after passage through the initializing magnetic field $H_i$, is given by the expression (3) below.

$$H_{c1} > \sigma_{w2}/2M_{s1}h_1 \qquad (3)$$

The reproducing magnetic field $H_r$ at the temperature $T_H$ in the high-temperature region 14 is given by the expression (4) below.

$$H_{c1} = \sigma_{w2}/2M_{s1}h_1 < H_r < H_{c1} + \sigma_{w2}/2M_{s1}h_1 \qquad (4)$$

When the reproducing magnetic field $H_r$ defined by the expression (4) is applied, the magnetization of the latent recording pit 41 of the recording layer 13 is transferred to the reproducing layer 11 (to cause the recording pit 4 to appear) only in the part where the domain wall due to the intermediate layer 12 exists.

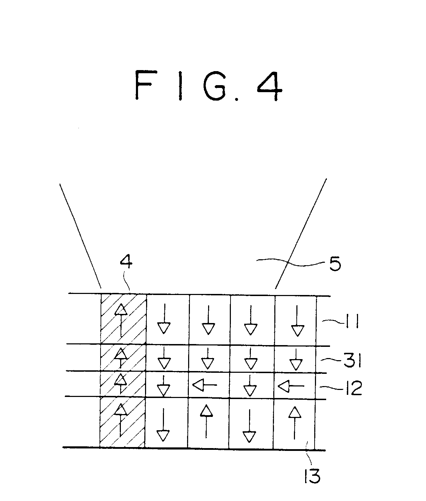

The magneto-optical recording medium 10 intended for the MSR system mentioned above has a three-layer structure comprised of a reproducing layer 11, an intermediate layer 12, and a recording layer 13. Alternatively, it may also have a four-layer structure, in which case a reproducing auxiliary layer 31 is interposed between a reproducing layer 11 and an intermediate layer 12, as shown in Figure 4 (enlarged schematic sectional view).

The reproducing auxiliary layer 31 is intended to enhance the characteristic properties of the reproducing layer 11. That is, it compensates the coercive force of the reproducing layer 11 at room temperature, with the result that the magnetization of the reproducing layer 11 oriented by the initializing magnetic field $H_i$ remains stable in spite of the presence of the domain wall, the domain wall enclosed in the intermediate layer 12 diffuses into the reproducing auxiliary layer 31 such that the coercive force rapidly decreases in the neighborhood of the reproducing temperature, and eventually the reproducing layer 11 is reversed and the domain wall disappears and the recording pit 4 appears.

If the four-layer structure with a reproducing auxiliary layer 31 is employed, the coercive force $H_{c1}$ of the reproducing layer 11 is replaced by $H_{CA}$ in expression (5) below and $\sigma_{w2}/2M_{s1}h_1$ is replaced by $\sigma_{w2}/(M_{s1}h_1 + M_{ss}h_s)$.

$$H_{CA} = (M_{s1}h_1H_{c1} + M_{ss}h_sH_{cs})/M_{s1}h_1 + M_{ss}h_s) \qquad (5)$$

($H_{c1} < H_{CA} < H_{cs}$ in the case of the MSR system in appearance mode) (where $M_{ss}$, $h_s$, and $H_{cs}$ denote the saturation magnetization, thickness, and coercive force of the reproducing auxiliary layer 31, respectively.)

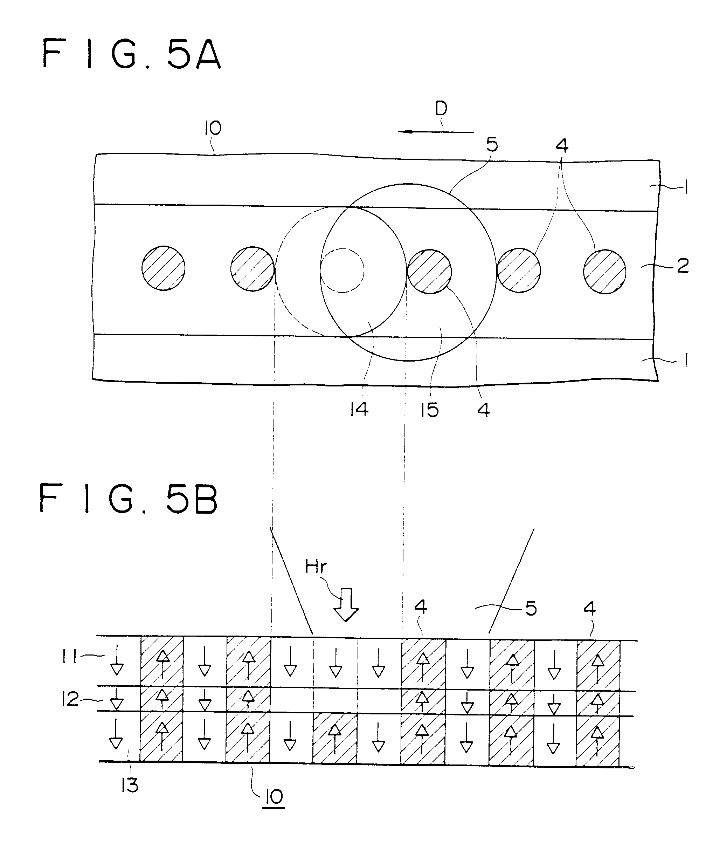

The MSR system that works in the disappearance mode is explained with reference to Figure 5A, a schematic plan view showing the recording pattern in the magneto-optical recording medium 10, and Figure 5B, a schematic sectional view showing the magnetization for recording. In Figures 3 and 5, like reference characters designate corresponding parts to avoid duplication. The disappearance mode does not need the initializing magnetic field $H_i$.

That is, the retrieval of written data from the magneto-optical recording medium 10 is accomplished by applying an external magnetic field $H_r$ defined by the expression (6) below, with the temperature of the high-temperature region 14 being higher than the Curie point $T_{c2}$ of the intermediate layer 12.

$$H_r > H_{c1} + \sigma_{w2}/2M_{s1}h_1 \qquad (6)$$

The application of the external magnetic field $H_r$ orients the magnetization downward in the high-temperature region 14 even though it is in the laser beam spot 5, so that the recording pit 4 in the reproducing layer 11 disappears. In other words, according to the MSR system in the disappearance mode, it is possible to improve resolution by retrieving only the recording pit 4 in the low-temperature region 15 in the beam spot 5.

In this case, it is necessary to establish proper conditions (such as coercive force) so that the recording pit 4 remains as the latent recording pit 41 in the recording layer 13 even after disappearance. At room temperature, the magnetization (or the information pit 4) of the recording layer 13 is retained in such a state that it can be retrieved by transfer to the reproducing layer 11.

As mentioned above, the MSR system in the appearance or disappearance mode permits the retrieval of a recording pit in part of the region under the laser beam spot for read-out. This results in the improvement in read-out resolution.

The MSR system may work in the appearance mode and disappearance mode in combination. In this case, the magneto-optical recording medium 10 has a high-temperature region 14, an intermediate-temperature region 16, and a low-temperature region 15 under the laser beam spot 5, with the temperature gradient in the direction in which the magneto-optical recording medium moves relative to the laser beam spot. The high-temperature region 14 has the function of disappearance explained above with reference to Figure 5, and the intermediate-temperature region 16 and low-temperature high-temperature region 15 function in the same manner as the region 14 and low-temperature region 15 explained above with reference to Figure 3.

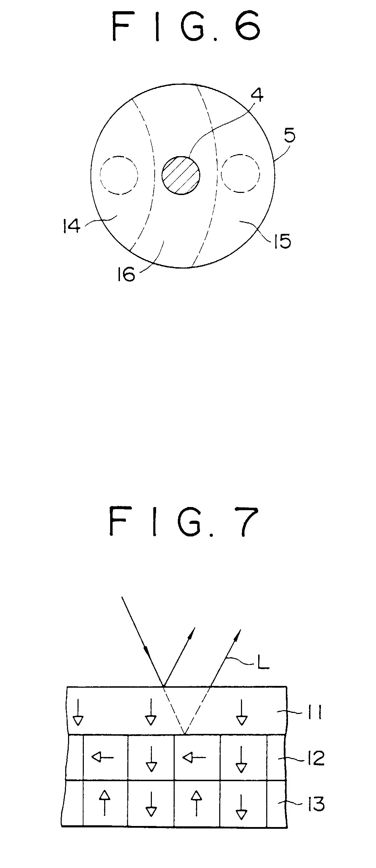

The MSR system that works in the appearance mode and disappearance mode in combination offers an advantage that the recording pit 4 (hatched in Figure 6) which is to appear in the reproducing layer 11 is confined to the narrow intermediate-temperature region 16 held between the high-temperature region 14 and the low-temperature region 16. This leads to an improved resolution.

The conventional magneto-optical recording medium for the MSR system has magnetic layers whose thicknesses are selected so that their coercive force, saturation magnetization, and domain wall energy satisfy the expressions (1) to (6). There is an instance where the reproducing layer 11 is so thin that it permits part of the read-out light L to pass through as shown in Figure 7. In this instance, the intermediate layer 12 or the reproducing auxiliary layer (not shown) reflects the light, causing the Kerr rotation angle $\theta_k$ of the reflected light to be detected. This situation nullifies the masking effect in the low-temperature region 15 (as explained with reference to Figure 3) or the masking effect in the high-temperature region 14 (explained with reference to Figure 5), resulting in a decreased C/N ratio.

The MSR system that works in the disappearance mode is explained with reference to Figure 5A, a schematic plan view showing the recording pattern in the magneto-optical recording medium 10, and Figure 5B, a schematic sectional view showing the magnetization for recording. In Figures 3 and 5, like reference characters designate corresponding parts to avoid duplication. The disappearance mode does not need the initializing magnetic field $H_i$.

That is, retrieval of written data from the magneto-optical recording medium 10 is accomplished by applying an external magnetic field $H_r$ defined by the expression (5) below, with the Curie temperature $T_{c2}$ of the intermediate layer 12 lower than the temperature of the high-temperature region 14.

$$H_r > H_{c1} + \sigma_{w2}/2M_{s1}h_1 \qquad (5)$$

The application of the external magnetic field $H_r$ orients the magnetization downward in the high-temperature region 14 even though it is in the laser beam spot 5, so that the recording pit 4 in the reproducing layer 11 disappears. In other words, according to the MSR system in the disappearance mode, it is possible to improve resolution by retrieving only the recording pit 4 in the low-temperature region 15 in the beam spot 5.

In this case, it is necessary to establish proper conditions (such as coercive force) so that the recording pit 4 remains as the latent recording pit 41 in the recording layer 13 even after disappearance. At room temperature, the magnetization (or the information pit 4) of the recording layer 13 is retained in such a state that it can be retrieved by transfer to the reproducing layer 11.

As mentioned above, the MSR system in the appearance or disappearance mode permits the retrieval of a recording pit in part of the region under the laser beam spot for read-out. This results in the improvement in read-out resolution. However, it is impossible to take full advantage of the MSR system, if the recording resolution is poor.

To improve the recording resolution, the present inventors proposed a method for high-resolution recording by magnetic modulation. (See Japanese Patent Application No. 39147/1990 "Method for Magneto-Optical Recording", incorporated herein).

According to the conventional method of forming recording pits by the modulation of laser light intensity, it is easy to form recording pits which are as small as the diameter of the laser beam. However, forming smaller recording pits for high-recording density needs to use the higher end of the intensity distribution, which leads to difficulties in the control of recording power. In other words, the recording by optical modulation has a disadvantage that the laser power has an extremely limited allowance if it is to form a domain which has a small diameter relative to the beam diameter. This disadvantage is due to the fact that the intensity of laser light conforms to the Gaussian distribution and that the magneto-optical recording medium permits heat diffusion.

There is another disadvantage of the optical modulation. That is, reducing the domain intervals (or recording pit intervals) to increase the recording density causes the laser light irradiated immediately before to raise the temperature of the recording medium, which affects the recording power for the subsequent domain (or recording pit). In other words, in the case of random data recording, the optimum value of the recording power varies according to the pattern of random data.

Because of these disadvantages, the optical modulation is limited in the improvement of recording density. This limitation offsets the improvement in read-out resolution.

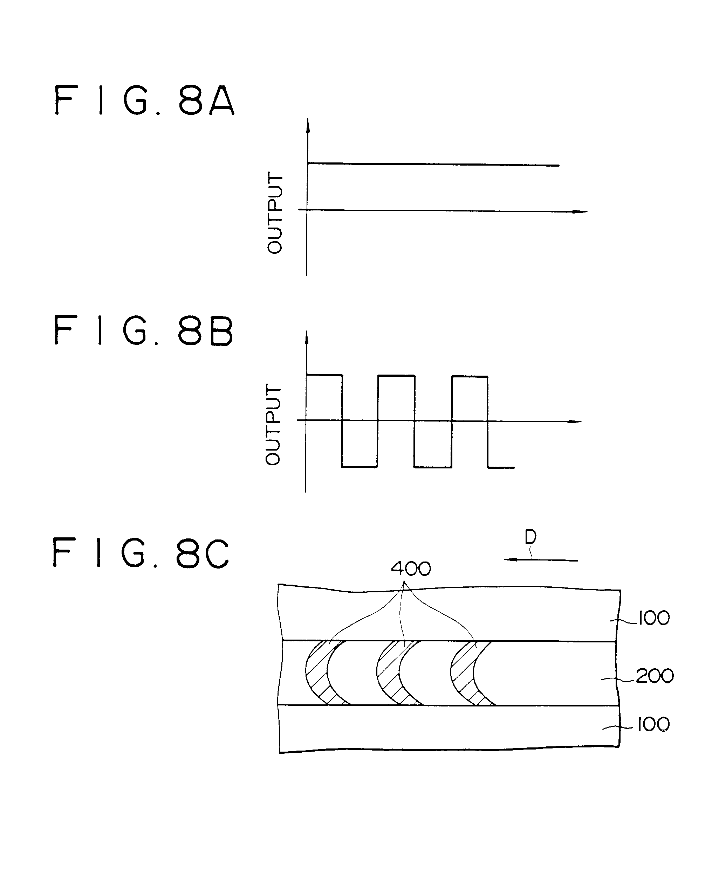

"Method for Magneto-Optical Recording" proposed in Japanese Patent Application No. 39147/1990 mentioned above, and incorporated herein, is intended to record signals by magnetic modulation on a magneto-optical recording medium designed for reproduction by the MSR system. Recording by magnetic modulation consists of forming recording pits (or domains) by means of the magnetic field which is modulated according to information to be recorded, while the magneto-optical recording medium is being irradiated with a continuous or pulsed laser beam. In other words, the process for recording by magnetic modulation involves heating the recording layer above the Curie point or compensation point and applying the external magnetic field with its polarity reversed according to the recording signals while keeping the heated state. In the case of recording by magnetic modulation, the pit length is controlled by the external magnetic field and is not affected by the distribution of laser beam intensity. This is schematically shown in Figure 8. It is assumed that the laser beam is kept at a constant output as shown in Figure 8A and the external magnetic field is applied with its polarity reversed at a constant frequency as shown in Figure 8B. Then, recording pits 400 are formed at a pitch corresponding to the reversing cycle of the external magnetic field, as shown in Figure 8C, with respect to regions 100 and 200.

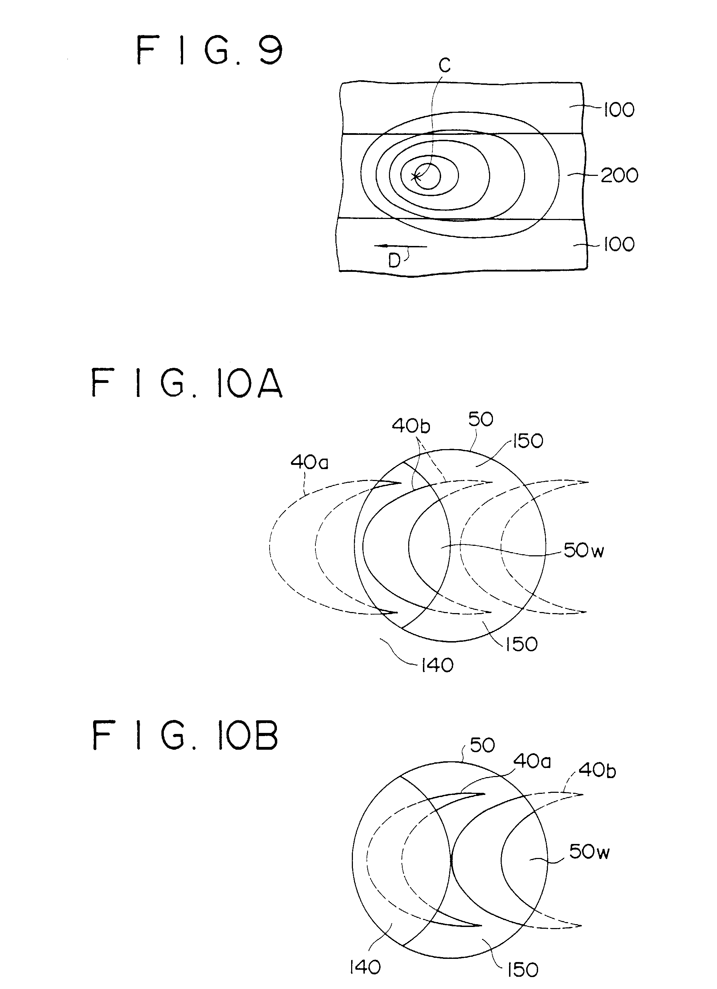

The recording by magnetic modulation just mentioned above permits high-density recording if it is applied to a magneto-optical recording medium 10 shown in Figures 3 and 5, which has at least a reproducing layer 11 and a recording layer 13. If the magneto-optical recording medium 10 with high-density recording undergoes reproduction by the MSR system which is capable of high-resolution reproduction, it would be possible to improve the S/N (or C/N) ratio. However, this is not the case for reasons that follow. The recording pit formed by the above-mentioned magnetic modulation recording takes on an arcuate or crescent shape, with a sharp curve in the direction in which the magneto-optical recording medium 10 moves, as shown in Figure 8C. The formation of such recording pits is due to heat accumulation in the magneto-optical recording layer (composed of a reproducing layer 11, an intermediate layer 12, and a recording layer 13) which has a comparatively low thermal conductivity. The heat accumulation is indicated by the isotherm as shown in Figure 9. It should be noted that the isotherm is elliptical, with the major axis in the longitudinal direction of the land 200 (between regions 100) in which the beam spot moves. This is because there is a big temperature difference between the center (indicated by C) of the laser beam spot and both sides of the line which the laser beam spot scans. It should also be noted that the temperature is highest at the forward end of the beam spot and hence the curvature of the isotherm is sharp at the forward end. This is the reason why the recording pit takes on a sharply curved crescent shape. The recording pit of such a crescent shape leads to a decreased S/N (or C/N) ratio.

The reproduction of crescent pits is explained with reference to Figures 10A and 10B. The reproduction by the MSR system in the appearance mode is illustrated in Figure 10A. In this case, the S/N (or C/N) ratio decreases because not only one recording pit 40b but also the tails of the adjacent preceding recording pit 40a are present in the high-temperature region 140 (or the window region 50W) for read-out by the reproducing layer beam spot 50. The reproduction by the MSR system in the disappearance mode is illustrated in Figure 10B. In this case, too, the S/N (or C/N) ratio decreases because the tails of the recording pit 40a, which should disappear in the window region 140, are present in the window region 50W.

This phenomenon occurs not only in the MSR system in appearance mode but also in the MSR system in disappearance mode explained above with reference to Figure 5. In the latter case, the low-temperature region under the laser beam spot 50 is the window region, and not only the recording pit 40c but also the tails of the adjacent recording pit 40b enter this region (as shown in Figure 10). This leads to a decreased S/N (or C/N - carrier-to-noise) ratio.

Meanwhile, in the case of the MSR system in the appearance mode, it is necessary to satisfy the conditions for the retention and reversal of magnetization of the magnetic layers throughout the initializing process, recording process, and reproducing process (including the initializing process). The conditions are stringent for the reproducing layer 11 (in the case of the three-layer structure as shown in Figure 3) or the reproducing auxiliary layer 31 (in the case of the four-layer structure as shown in Figure 4). This narrows the allowable range of the composition.

It follows, therefore, that even a magneto-optical recording medium having the characteristic properties that satisfy the above-mentioned conditions becomes poor in the reproducing C/N ratio after the above-mentioned processes have been repeated for recording and retrieval.

Presumably, the deterioration of the characteristic properties (such as C/N ratio) is due to the crystallization in the magnetic layers and the diffusion of atoms between the layers which occur after the repeated temperature rise by recording, erasure, and retrieval. The problem is serious particularly in the reproducing layer 11 (Figure 3) or the reproducing auxiliary layer 31 (Figure 4) which needs the high stability of the characteristic properties.

The EP-A-0 415 449, which belongs to prior art in the sense of Art.54(3) EPC, discloses a magneto-optical recording medium comprising a reproducing magnetic layer (playback magnetic layer), an intermediate magnetic layer and a recording layer laminated on a substrate and which are magnetically coupled, wherein a first and a second playback magnetic layer may have a total thickness of 450 Å.

The EP-A-0 492 581, which also belongs to prior art in the sense of Art. 54(3) EPC, relates to a method of reproducing signals recorded on a magneto-optical recording medium and discloses in Figure 1 a magneto-optical recording medium comprising a reproducing layer. an intermediate layer and a record hold layer.

The EP-A-0 318 925 reflected in the preamble of claim 1 relates to a method of reproducing a signal from a magneto-optical recording medium and discloses in Figure 1 the structure of a magneto-optical recording medium comprising a first magnetic film having reproducing function, a second magnetic film as an intermediate layer and a third magnetic film having recording function. The reproducing film according to the example has a thickness of 450 Å.

It is an object of the present invention to provide a magneto-optical recording medium for the MSR system which permits stable reproduction with a high resolution without sacrificing the C/N ratio.

It is a further object of the present invention to solve the above-mentioned problems associated with the shape of the recording pit which is peculiar to the magneto-optical recording medium designed for the MSR reproducing system, thereby improving the resolution of read-out by the MSR system (or improving the S/N (or C/N) ratio).

It is a still further object of the present invention to provide a reliable magneto-optical recording medium for the MSR system which will retain its reproducing characteristics for a long period of time.

According to the invention, a magneto-optical recording medium is provided according to the features of the appended claim 1.

Figure 1 is a plan view illustrating a read-out system for a conventional magneto-optical recording medium;

Figure 2 is a plan view illustrating a read-out system for a conventional magneto-optical recording medium;

Figure 3 is a plan view illustrating an MSR system in an appearance mode;

Figure 4 is a schematic sectional view of the magneto-optical recording medium;

Figure 5 is a plan view illustrating an MSR system in a disappearance mode;

Figure 6 is a view illustrating an MSR system in another mode;

Figure 7 is a schematic sectional view of the magneto-optical recording medium;

Figure 8 is a plan view illustrating recording by magnetic modulation;

Figure 9 is an isotherm observed in the magneto-optical recording medium in a comparative example;

Figure 10 is a schematic representation showing a relationship between a recording pit and a read-out region which are formed in the magneto-optical recording medium in the comparative example;

Figure 11 is a schematic enlarged sectional view of a magneto-optical recording medium;

Figure 12 is a graphical representation showing the Kerr rotation angle which changes with the thickness of the reproducing layer;

Figure 13 is a schematic sectional view showing the state of magnetization of the magnetic layer;

Figure 14 is a graphical representation showing the output characteristics versus the thickness cf the recording layer;

Figure 15 is a schematic enlarged sectional view of a magneto-optical recording medium;

Figure 16 is a schematic sectional view of a further example of a magneto-optical recording medium;

Figure 17 is an isotherm observed in the magneto-optical recording medium of Fig. 16;

Figure 18 is a schematic representation showing the relationship between the recording pit and the read-out region which are formed in the magneto-optical recording medium of Fig. 16;

Figure 19 is an enlarged view showing the recording pits in the magneto-optical recording medium of Fig. 16;

Figure 20 is an enlarged view showing the recording pits in the magneto-optical recording medium in the comparative example;

Figure 21 is a schematic sectional view showing an embodiment of the magneto-optical recording medium of the present invention;
Figure 22 is a schematic sectional view showing the magneto-optical recording layer composed of rare earth metal layers and transition metal layers laminated alternately according to the present invention; and
Figure 23 is a plan view showing an embodiment of the sputtering apparatus used to make the magneto-optical recording medium in the still further development of the present invention.

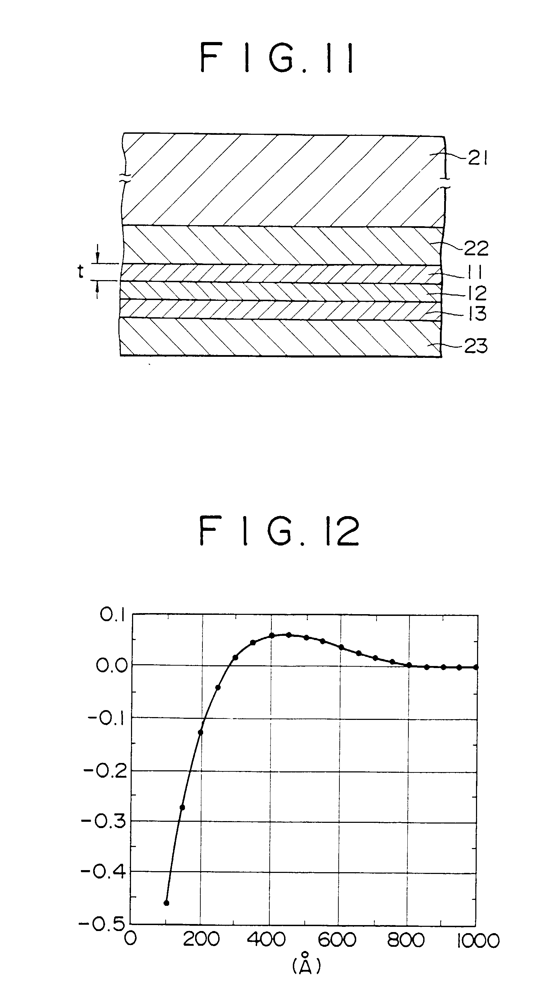

An example of a magneto-optical recording medium is shown in Figure 11 (schematic enlarged sectional view). The example is embodied in a magneto-optical recording medium of the type having at least a reproducing layer 11 and a recording layer 13 which are magnetically coupled with each other, said reproducing layer 11 permitting recorded signals to be read out according to its change in the state of magnetization. The recording layer has a thickness in the range from 150Å to 1000Å.

As mentioned above, the magneto-optical recording medium of the example has a reproducing layer 11 whose thickness is greater than 150Å, so that it permits the magnetization of the reproducing layer 11 or the magnetization transferred from the recording layer 13 to be read out with certainty. This is confirmed by the following calculations and experiments.

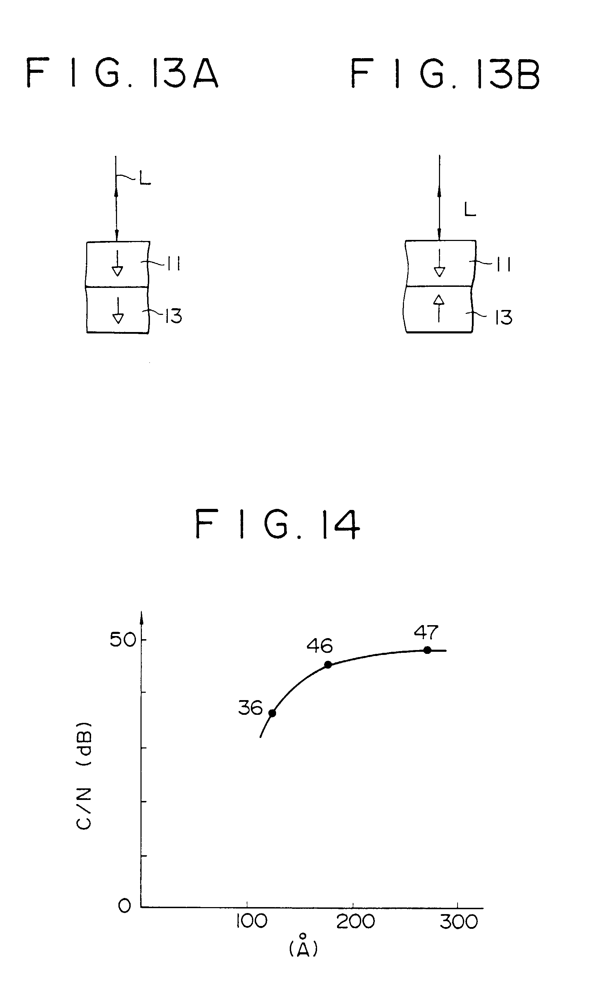

An experiment was carried out on the Kerr rotation angle which is observed under varied magnetization states when a read-out light L is directed to a reproducing layer 11 of GdFeCo with a different thickness formed on a recording layer 13 of TbFeCo with a thickness of 1000Å. The results are shown in Figure 12, in which the abscissa represents the thickness of the reproducing layer 11 and the ordinate represents the value of $(\theta_{ka} - \theta_{kb})/2\theta_k$, where $\theta_{ka}$ denotes the Kerr rotation angle in Figure 13A and $\theta_{kb}$ denotes the Kerr rotation angle in Figure 13B, and $\theta_k$ denotes the Kerr rotation angle in the case where both the reproducing layer 11 and recording layer 13 have a thickness of 1000Å. The effect of magnetization of the lower layer can be avoided when $(\theta_{ka} - \theta_{kb}/\theta_k)$ is close to 0 or when the Kerr rotation angles are the same in both states of magnetization shown in Figures 13A and 13B. It is noted from Figure 12 that when the reproducing layer 11 is thinner than 200A, the effect of the layer under the reproducing layer 11 appears and hence the value of $(\theta_{ka} - \theta_{kb})/2\theta_k$ is high. Especially in the case where the thickness is smaller than 150Å, the value is high by more than 25%.

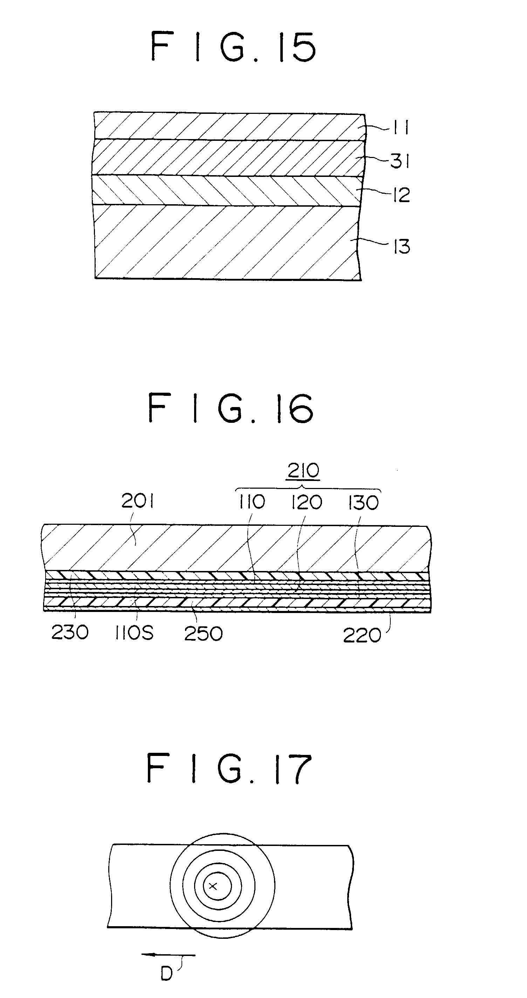

An experiment was carried out on the effect of the thickness of the reproducing layer 11 on the output characteristics (C/N ratio). The results are shown in Figure 14. The magneto-optical recording medium used for the experiment has four magnetic layers as shown in Figure 15 (which is a schematic enlarged sectional view). The reproducing layer 11 is made of GdFeCo. The reproducing auxiliary layer 31 (200Å thick) is made of Tb

($Fe_{95}Co_5$). The intermediate layer 12 (150Å thick) is made of Gd($Fe_{95}Co_5$). The recording layer 13 (400Å thick) is made of Tb($Fe_{85}Co_{15}$). This magneto-optical recording medium was tested for C/N ratio at a linear speed of 8 m/s, a frequency of 10 MHz, a reproducing power of 3 mW, and a reproducing magnetic field of 300 Oe. It is noted from Figure 14 that it is possible to obtain a C/N ratio higher than 40 dB if the reproducing layer 11 is thicker than about 150Å.

If the reproducing layer 11 is made thicker than 1000Å, it is necessary to increase the power of the semiconductor laser (for read-out) which produces the desired temperature region for read-out, as explained with reference to Figures 3 and 5. In consideration of the practical reproducing power, the reproducing layer 11 shculd be thinner than about 1000Å.

The reproducing layer of proper thickness produces a satisfactory masking effect in read-out of the magneto-optical recording medium by the MSR system. This permits stable, reliable high-resolution read-out.

A further example of a magneto-optical recording medium will be described in more detail with reference to Figure 11, which is designed for read-out by the MSR system in disappearance mode. It is composed of a transparent substrate 21 of polycarbonate (PC) or the like, and an 800Å thick layer 22 of dielectric substance (such as SiN), a 300Å thick reproducing layer 11 of GdFeCo, a 200Å thick intermediate layer 12 of TbFeCoAl, a 400Å thick recording layer 13 of TbFeCo, and an 800Å thick surface protective layer 23 of SiN, which are coated consecutively on the substrate by continuous sputtering.

The magneto-optical recording medium 10 constructed as mentioned above was read out under the following conditions by the MSR system in the disappearance mode as explained in Figure 5.

Linear speed: 8 m/s (in the direction of arrow D in Figure 5;

Frequency: 10 MHz;
Reproducing Power: 3 mW;
Reproducing magnetic field: 300 Oe.

It was possible to attain a masking effect higher than 25% and a C/N ratio higher than 40 dB.

Incidentally, in this example the read-out was carried out by the MSR system in the disappearance mode which does not employ the initializing magnetic field. However, the example may also be applied to the magneto-optical recording medium designed for read-out by the MSR system in the appearance mode which employs the initializing magnetic field.

As mentioned above, the magneto-optical recording medium as described in the above Examples has a reproducing layer 11 which is specifically limited in thickness from 150Å to 1000Å. By virtue of this limitation, it gives a masking effect higher than 25% in read-out by the MSR system. This leads to the stable, reliable high-resolution read-out with a high C/N ratio.

A further example of a magneto-optical recording medium is embodied in a type (as schematically shown in section in Figure 16) having a magneto-optical recording layer 210 composed of at least a reproducing layer 110 and a recording layer 130. The recording layer 130 is intended for recording by magnetic modulation. he reproducing layer 110 permits records to be read out according to its change in the state of magnetization. The magneto-optical recording layer 210 has a layer 220 of good heat conductor laminated thereon directly or indirectly.

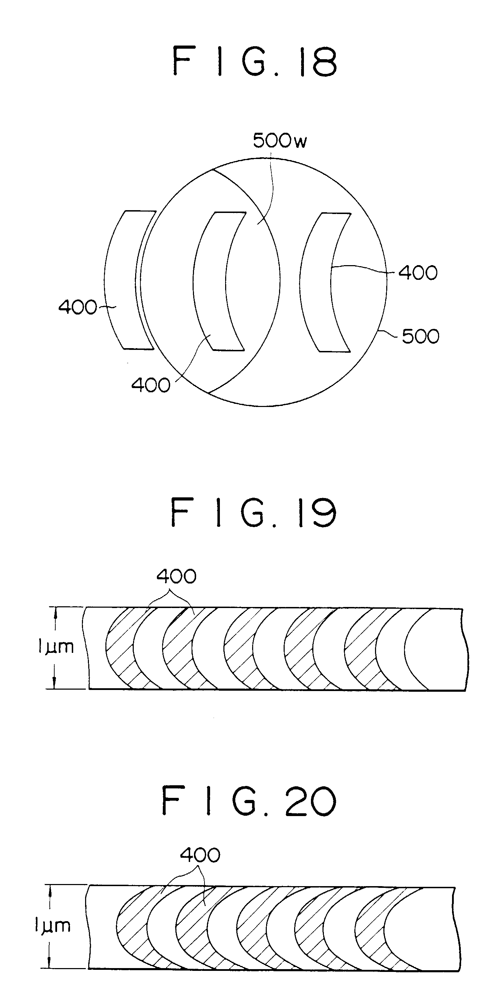

As mentioned above, the magneto-optical recording medium has a layer 220 of a good heat conductor which diffuses heat effectively, so that the isotherm becomes a concentric circle as shown in Figure 17 which eliminates a sharp curvature in the direction in which the beam spot moves. As a result, the recording pit 400 formed by magnetic modulation takes on gently curved shape as shown in Figure 18. The recording pit 400 of such a shape offers the following advantage. At the time of retrieval by a reproducing laser beam, only one recording pit 400 is present in one window region 500W under the reproducing laser beam spot, and the tails cf adjacent recording pits are not present in the window region 500W, as shown in Figure 18. This leads to an improvement in the S/N (cr C/N - carrier-to-noise) ratio and hence an improvement in the reproducing resolution.

Reference will be made to a magneto-optical recording medium as shown in Figure 16. It is composed of a transparent substrate 201 of polycarbonate resin or the like, and an 800Å thick film 230 of dielectric substance (such as SiN), a magneto-optical recording layer 210, and a 300Å thick heat-conducting layer of aluminum, which are coated consecutively on the substrate.

The magneto-optical recording layer 210 may be composed of a reproducing layer 110, an intermediate layer 120, and a recording layer 130, which are formed on top of the other by sputtering, as explained above with reference to Figure 3 or Figure 5.

The reproducing layer 110 should preferably be of the double-layer structure having a reproducing auxiliary layer 110s as a second layer, so that it has a high coercive force at room temperature. The effect of the reproducing auxiliary layer 110s is that the term $H_{c1}$ in expressions (1) and (4) above is replaced by expression (6) below and $\sigma_{w2}/2M_{s1}h_1$ in expressions (1), (3), and (4) above is replaced by $\sigma_{w2}/(M_{s1}h_1 + M_{s1s}h_{1s})$.

$$(M_{s1}h_1H_{c1} + M_{s1s}H_{c1s})/(M_{s1}h_1 + M_{s1s}h_{1s}) \quad (6)$$

(where $H_{c1}$, $M_{s1s}$, and $h_{1s}$ denotes the coercive force, magnetization, and thickness, respectively, of the reproducing auxiliary layer 110s.)

In the case where the magneto-optical recording layer 210 is comprised of a reproducing layer 110 (including a reproducing auxiliary layer 110s), an intermediate layer 120, and a recording layer 140, the reproducing layer 110 may be made of GdFeCo having a Curie point $T_{c1}$ lower than 300°C, the reproducing auxiliary layer 110s may be made of TbFeCoAl having a Curie point $T_{c1s}$ of about 120°C, the intermediate layer 120 may be made cf GdFeCo having a Curie point $T_{c2}$ of about 250°C, and the recording layer 130 may be made of TbFeCo having a Curie point $T_{c3}$ of about 250°C.

The magneto-optical recording medium constructed as mentioned above permits recording pits 400 to be formed as shown in Figure 19 (an enlarged view) in recording by magnetic modulation under the following conditions.

Linear speed: 16 m/sec;
Laser Wavelength: 780 nm;
NA of cbject: 0.53;
Mark length: 0.4 μm.

By contrast, a comparative magneto-optical recording medium, which is similar to that shown in Figure 16 but lacks the layer 220 of a good heat conductor, gives recording pits as shown in Figure 20 (an enlarged view) when recording is performed under the same conditions as mentioned above.

There is an apparent difference between Figure 19 and Figure 20. The magneto-optical recording medium gives recording pits 400 which take a gently curved crescent shape (close to a rectangle). This is due to the layer 220 being a good heat conductor which increases the heat diffusion of the magneto-optical recording medium. The increased heat diffusion decreases the difference between the temperature distribution in the direction in which the laser beam spot 500 moves relative to the magneto-optical recording medium at the time of recording and the temperature distribution in the direction across the recording track (land). As a result, the isotherm is approximately concentric.

The layer 220 of a good heat conductor is made of not only aluminum but also aluminum alloy, silver, gold, copper, etc. It should preferably be approximately 50 - 1200Å thick. With a thickness smaller than 50Å, it hardly diffuses heat. With a thickness in excess of 1200Å, it gives rise to an excessive reproducing power.

The magneto-optical recording medium permits the recorded pits to be read out by the MSR system in the appearance mode or the disappearance mode explained above with reference to Figures 3 and 5. In the case of read-out by MSR system in appearance mode, there exists only one recording pit 400 in the window region 500W (which is the high-temperature region shown in Figure 18). This leads to the improved S/N (or C/N) ratio. In the case where the present invention is applied to the MSR system in the disappearance mode, it is possible to greatly improve the C/N ratio. This is contrary to the poor C/N ratio expected from the MSR system in the disappearance mode, in which the window region 500W is so large as to embrace the recording pit 40a which ought to disappear, as shown in Figure 10B.

The above-mentioned examples may be applied to a magneto-optical recording medium designed for read-out by the MSR system in the appearance mode and the disappearance mode in combination. In this case, an intermediate-temperature region is formed between the high-temperature region and the low-temperature region in the beam spot 500, with the high-temperature region functioning in the same manner as that in the disappearance mode, the low-temperature region being kept in the same initialized state as in the appearance mode, and the intermediate-temperature region permitting the recording pit 400 to appear in the reproducing layer 110. This arrangement leads to a high read-out resolution.

In another embodiment, the magneto-optical recording layer 210 may be such that the individual layers or at least the reproducing layer 110, which is irradiated with a laser beam for read out by the MSR system, and is constructed from a laminate of monoatomic layers or multiatomic layers of a rare earth element and a transition metal in an artificial lattice structure. This laminate structure prevents the characteristic properties of the recording layer from being deteriorated by mutual diffusion induced by the repeated heating with laser irradiation.

The magneto-optical recording medium is designed for recording by magnetic modulation with recording pits which take a gently curved shape, so that it permits read-out with an improved S/N (or C/N) ratio or an improved read-out resolution. Therefore, it permits the feature of the MSR read-out system to be fully utilized for high-density recording.

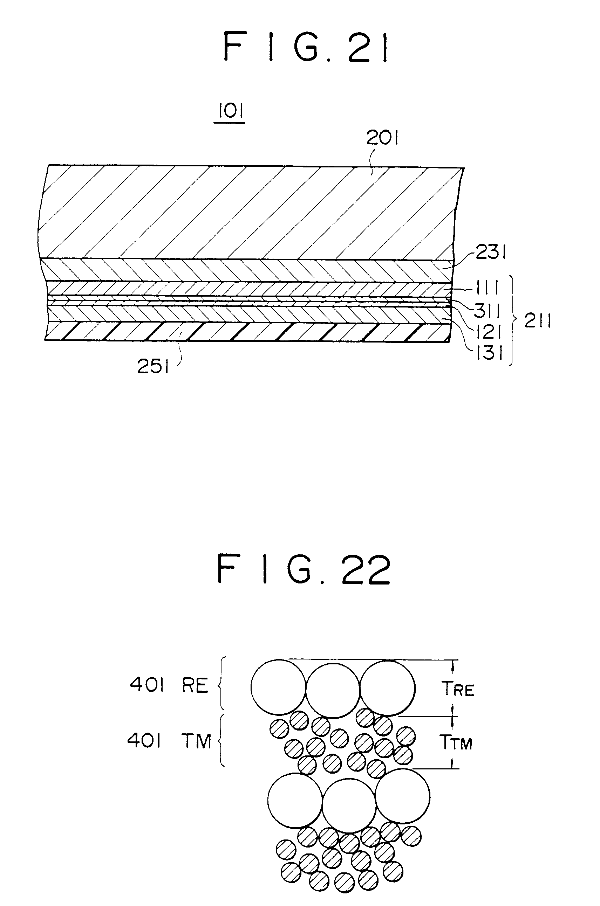

A further example of a magneto-optical recording medium is shown in Figure 21 (schematic sectional view). This example is embodied in a magneto-optical recording medium 101 of the type having at least a reproducing layer 111, a reproducing auxiliary layer 311, and a recording layer 131, said reproducing layer 111 permitting recorded signals to be read out according to its change in the state of magnetization. The reproducing auxiliary layer 311 is composed of layers of rare earth metal 401RE and layers of transition metal 401TM which are laminated alternately so that they form the structure of an artificial lattice, as shown in Figure 22 (schematic sectional view).

The present invention is embodied in a magneto-opzical recording medium of the type having at least a reproducing layer and a recording layer, said reproducing layer permitting recorded signals to be read out according to its change in the state of magnetization. The reproducing layer is composed of layers cf rare earth metal 401RE and layers of transition metal 401TM which are laminated alternately so that they form the structure of an artificial lattice.

The layer of rare earth metal 401RE has a thickness of monoatomic layer to diatomic layer, and the layer of transition metal 401TM has a thickness greater than diatomic layer according to the desired composition.

The above-mentioned structure of an artificial lattice formed by the alternating laminations of rare earth metal layers 401RE and transition metal layers 401TM prevents the reproducing auxiliary layer 311 or reproducing layer 111 from becoming deteriorated in its reproducing characteristics even after repeated use. This is important because the reproducing auxiliary layer of reproducing layer greatly affects the reproducing action and is required to exhibit its magnetic properties (such as coercive force and magnetization) under specific conditions (such as temperature and reproducing magnetic field). Therefore, the structure of artificial lattice contributes to the improved reliability and prolonged life.

The laminated structure of rare earth metal layer and transition metal layer offers some advantages over a mono-layered structure of an alloy of rare earth metal and transition metal. That is, it produces a stable state by causing one atom in the rare earth metal to combine with a plurality (say, two) of atoms of the adjacent transition metal. In addition, it prevents the crystallization which would otherwise occur as the temperature rises and hence keeps stable the characteristics of the amorphous layer.

A still further development of the present invention will be described in more detail with reference to an embodiment of the magneto-optical recording medium 101 shown In Figure 21, which has a magneto-optical recording layer 211 composed mainly of a reproducing layer 111, a reproducing auxiliary layer 311, an intermediate layer 121, and a recording layer 131. These four layers are formed on top of the other consecutively by sputtering on a transparent substrate 201 of glass, acrylic resin, or polycarbonate resin, with an 800Å thick transparent layer of dielectric substance (SiN) interposed therebetween, which functions as a protective film or interference film. The top of the magneto-optical recording layer 211 is coated with a protective film 251 of nonmagnetic metal or dielectric substance. (An example of the protective film is an 800Å thick film of SiN.)

Each of the reproducing auxiliary layer 311, reproducing layer 111, intermediate layer 121, and recording layer 131 is formed in laminated layers (having the structure of artificial lattice) of rare earth metal 401RE and transition metal 401TM, as schematically shown in Figure 22.

The reproducing layer 111 is composed of rare earth metal layers 401RE, each having a thickness $T_{RE}$ of 3.4Å corresponding to the thickness of a monoatomic layer of Gd, and transition metal layers 401TM, each having a thickness $T_{TM}$ of 4.9Å corresponding to the thickness of an oligoatomic layer of $Fe_{85}Co_{15}$, with the total thickness being 300Å and the entire composition being $Gd_{22}(Fe_{85}Co_{15})_{77}$.

The reproducing auxiliary layer 311 is composed of rare earth metal (Tb) layers 401RE, each having a thickness of 3.4 Å, and transition metal ($Fe_{95}Co_5$) layers 401TM, each having a thickness of 4.7 Å, with the total thickness being 100 Å and the entire composition being $Tb_{12}(Fe_{95}Co_5)_{88}$.

The intermediate layer 121 is composed of rare earth metal (Gd) layers 401RE, each having a thickness of 3.4 Å, and transition metal ($Fe_{95}Co_5$) layers 401TM, each having a thickness of 4.7 Å, with the total thickness being 100 Å and the entire composition being $Gd_{20}(Fe_{95}Co_5)_{80}$.

The recording layer 131 is composed of rare earth metal (Tb) layers 401RE, each having a thickness of 3.4 Å, and transition metal ($Fe_{85}Co_{15}$) layers 401TM, each having a thickness of 4.7 Å, with the total thickness being 400 Å and the entire composition being $Tb_{25}(Fe_{85}Co_{15})_{75}$.

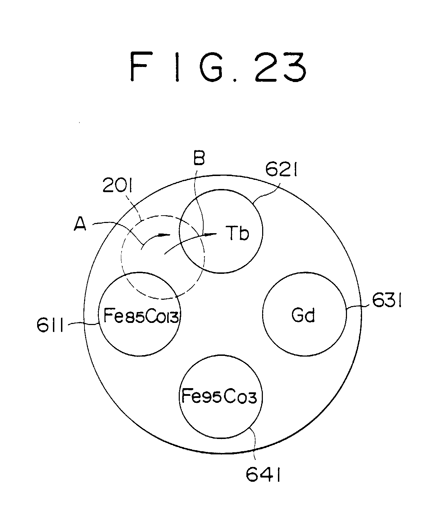

The reproducing layer 111, reproducing auxiliary layer 131, intermediate layer 121, and recording layer 131 can be formed by using a sputtering apparatus with several sputtering sources as shown in Figure 23 (schematic plan view).

The sputtering apparatus shown in Figure 23 has four targets 611 ($Fe_{85}Co_{15}$), 621 (Tb), 631 (Gd), and 641 ($Fe_{95}Co_5$) in the same chamber.

During sputtering, the substrate 201 rotates in the direction of arrow A on its axis and revolves in the direction of arrow B so that it passes over the target 611, 621, 631, and 641, sequentially.

To form the reproducing layer 111, the target 611 ($Fe_{85}Co_{15}$) and target 631 (Gd) are activated for sputtering, while the substrate rotates in the direction of arrow A and revolves in the direction of arrow B. In this way it is possible to form the repeated structure of transition metal layers 401TM ($Fe_{85}Co_{15}$) and rare earth metal layers 401RE (Gd), with the resulting reproducing layer 111 having the composition GdFeCo.

Subsequently, the target 621 (Tb) and the target 641 ($Fe_{95}Co_5$) are activated for sputtering to form the reproducing auxiliary layer 311 (TbFeCo).

Further, the target 631 (Gd) and the target 641 ($Fe_{95}Co_5$) are activated for sputtering to form the intermediate layer 121 which is composed of rare earth metal layers 401RE (Gd) and transition metal layers 401TM ($Fe_{95}Co_5$) laminated alternately.

Finally, the target 611 ($Fe_{85}Co_{15}$) and the target 621 (Tb) are activated for sputtering to form the recording layer 131 which is composed of transition metal layers 401TM and rare earth metal layers 401RE laminated alternately.

The thus formed magneto-optical recording medium 101 undergoes recording by optical modulation or magnetic modulation and then undergoes retrieval by the MSR system in appearance mode which was explained above with reference to Figures 3 and 4.

The embodiment shown in Figure 21 has the magneto-optical recording layer 211 of four-layer structure composed of reproducing layer 111, reproducing auxiliary layer 311, intermediate layer 121, and recording layer 131. The present invention may also be applied to the magneto-optical recording layer as explained with reference to Figure 3, which has the three-layer structure composed of reproducing layer 11, intermediate layer 12, and recording layer 13 (Figure 3).

In this case, at least the reproducing layer 11, or preferably each of the reproducing layer 11, intermediate layer 12, and recording layer 13 should have the laminate structure composed of rare earth metal layers 401RE and transition metal layers 401TM as explained above with reference to Figure 22.

In this case, the reproducing layer 11, intermediate layer 12, and recording layer 13 (Figure 3) may have a composition of GdFeCo, TbFe, and TbFeCo as a whole, respectively.

The above-foregoing is not intended to limit the structure and composition of the magneto-optical recording layer 211, but modifications and changes can be made as necessary.

As mentioned above, the present invention provides a magneto-optical recording medium for the MSR system in the appearance mode which has good reproducing characteristic properties owing to the reproducing layer 111 having a high coercive force at room temperature and the reproducing auxiliary layer 131 (to compensate the characteristic properties of the recording layer) with the structure of the artificial lattice which is formed by alternating laminations of rare earth metal layers 401RE and transition metal layers 401TM. Since this structure stabilizes the composition and state, the magneto-optical recording medium of the present invention has a long life and high reliability.

Although various minor changes and modifications might be proposed by those skilled ifn the art, it will be understood that we wish to include within the claims of the patent warranted hereon all such changes and modifications as reasonably come within our contribution to the art.

## Claims

1. A magneto-optical MSR recording medium (101), comprising:

   a reproducing magnetic layer (111), an intermediate magnetic layer (311), and a recording hold magnetic layer (131) laminated on a substrate (201) and which are magnetically coupled:
   the layers related to one another by the following expressions:

   $$H_{c1} + \sigma_{w2}/2M_{s1}h_1 < H_{c3} - \sigma_{w2}/2M_{s3}h_3$$

   $$H_{c1} > \sigma_{w2}/2M_{s1}h_1$$

$$H_{c1} - \sigma_{w2}/2M_{s1}h_1 < H_{c1} + \sigma_{w2}/2M_{s1}h_1 \text{ for } T > T_{c2}$$

at a specific temperature,
where $H_{c1}$ is a coercive force of the reproducing layer, $\sigma_{w2}$ is a domain wall energy at an interface between the reproducing layer and recording layer, $M_{s1}$ is a saturated magnetization of the reproducing layer, $h_1$ is a thickness of the reproducing layer, $h_3$ is a thickness of the recording layer, $H_{c3}$ is a coercive force of the recording layer, $T_{c2}$ is a Curie point of the intermediate layer.
the reproducing layer having a thickness in a range from 15 to 100 nm (150 Å to 1000 Å);

**characterized in that**

said recording hold magnetic layer is formed of layers (401RE) of rare earth metal and layers (401TM) of transition metal which are laminated in alternating fashion.

2.  A magneto-optical MSR recording medium according to claim 1, wherein a reproducing auxiliary layer (311) is provided adjacent the reproducing layer and wherein said reproducing auxiliary layer is also formed of layers of rare earth metal and layers of transition metal which are laminated in alternating fashion.

**Patentansprüche**

1.  Magneto-optisches MSR-Aufzeichnungsmedium (101) mit:

einer magnetischen Wiedergabeschicht (111), einer magnetischen Zwischenschicht (311) und einer magnetischen Aufzeichnungshalteschicht (131), die auf einem Substrat (201) geschichtet sind und die magnetisch gekoppelt sind, wobei die Schichten durch die folgenden Ausdrücke in Beziehung zueinander stehen:

$$H_{c1} + \sigma_{w2}/2M_{s1}h_1 < H_{c3} - \sigma_{w2}/2M_{s3}h_3$$

$$H_{c1} > \sigma_{w2}/2M_{s1}h_1$$

$$H_{c1} - \sigma_{w2}/2M_{s1}h_1 < H_{c1} + \sigma_{w2}/2M_{s1}h_1 \text{ für } T > T_{c2}$$

bei einer spezifischen Temperatur,
wobei $H_{c1}$ die Koerzitivkraft der Wiedergabeschicht ist, $\sigma_{w2}$ die Domänenwandenergie an einer Grenzfläche zwischen der Wiedergabeschicht und der Aufzeichnungsschicht ist, $M_{s1}$ die gesättigte Magnetisierung der Wiedergabeschicht ist, $h_1$ die Dicke der Wiedergabeschicht ist, $h_3$ die Dicke der Aufzeichnungsschicht ist, $H_{c3}$ die Koerzitivkraft der Aufzeichnungsschicht ist, $T_{c2}$ der Curie-Punkt der Zwischenschicht ist,
und die Wiedergabeschicht eine Dicke in einem Bereich von 15 bis 100 nm (150 Å bis 1000 Å) aufweist,

**dadurch gekennzeichnet, daß**

die magnetische Aufzeichnungshalteschicht aus Schichten (401RE) eines Seltenerdmetalls und Schichten (401TM) eines Übergangsmetalls gebildet ist, welche auf eine alternierende Weise übereinander geschichtet sind.

2.  Magneto-optisches MSR-Aufzeichnungsmedium nach Anspruch 1, bei welchem eine Hilfswiedergabeschicht (311) der Wiedergabeschicht benachbart angeordnet ist, und die Hilfswiedergabeschicht ebenso aus Schichten eines Seltenerdmetalls und Schichten eines Übergangsmetalls gebildet ist, welche auf eine alternierende Weise übereinander geschichtet sind.

**Revendications**

1.  Support d'enregistrement MSR magnéto-optique (101) comprenant :

une couche magnétique de reproduction (111), une couche magnétique intermédiaire (311), et une couche magnétique de conservation d'enregistrement (131) laminée sur un substrat (201) et qui sont magnétiquement couplées :
les couches liées les unes aux autres par les expressions suivantes :

$$H_{c1} + \sigma_{w2}/2M_{s1}h_1 < H_{c3} - \sigma_{w2}/2M_{s3}h_3$$

$$H_{c1} > \sigma_{w2}/2M_{s1}h_1$$

$$H_{c1} - \sigma_{w2}/2M_{s1}h_1 < H_{c1} + \sigma_{w2}/2M_{s1}h_1 \text{ pour } T > T_{c2}$$

à une température spécifique,
où $H_{c1}$ est une force coercitive de la couche de reproduction, $\sigma_{w2}$ est une énergie de paroi de domaine sur une interface entre la couche de reproduction et la couche d'enregistrement, $M_{s1}$ est une magnétisation saturée de la couche de reproduction, $h_1$ est une épaisseur de la couche de reproduction, $h_3$ est une épaisseur de la couche d'enregistrement, $H_{c3}$ est une force coercitive de la couche d'enregistrement, $T_{c2}$ est un point de Curie de la couche intermédiaire,
la couche de reproduction ayant une épaisseur dans l'intervalle de 15 à 100 nm (150 Å à 100 Å):

caractérisé en ce que

ladite couche magnétique de conservation d'enregistrement est formée de couches de couches métalliques de terre rare (401RE) et de couches métalliques de transition (401TM) qui sont laminées d'une manière alternée.

2. Support d'enregistrement MSR magnéto-optique selon la revendication 1, dans lequel une couche auxiliaire de reproduction (311) est placée adjacente à la couche de reproduction et dans lequel ladite couche auxiliaire de reproduction est aussi formée de couches métalliques de terre rare et de couches métalliques de transition qui sont laminées d'une manière alternée.

# F I G. IA

# F I G. IB

# F I G. IC

# F I G. ID

# F I G. 2A

# F I G. 2B

# F I G. 2C

# F I G. 2D

# F I G. 3A

# F I G. 3B

# F I G. 4

# F I G. 5A

# F I G. 5B

# F I G. 6

# F I G. 7

# F I G. 8A

OUTPUT

# F I G. 8B

OUTPUT

# F I G. 8C

D

400

100

200

100

FIG. 9

FIG. 10A

FIG. 10B

# F I G. 11

# F I G. 12

# F I G. 13A   F I G. 13B

# F I G. 14

EP 0 498 440 B1

F I G. 15

11
31
12
13

F I G. 16

210
201    110  120  130

230   110S   250         220

F I G. 17

D

23

# F I G. 18

500w

400

400

400

500

# F I G. 19

400

1μm

# F I G. 20

400

1μm

# F I G. 21

# F I G. 22

# F I G. 23